# EUROPEAN PATENT APPLICATION

(11) **EP 0 890 905 A2**
(43) Date of publication of application: **13.01.1999**
(21) Application number: 97309984.9
(22) Date of filing: 11.12.1997
(51) Int. Cl.: G06F 13/38, G06F 3/06

(54) **Computer interface apparatus**

(30) Priority: 08.07.1997 US 889547; 14.11.1997 US 970303
(71) Applicant: Shuttle Technology Limited, Wokingham, Berkshire, RG41 2GY (GB)
(72) Inventor: Venkateswaran, P.K., Nuthulinganpet, Pondicherry, 605008 (IN)
(74) Representative: Mackenzie, Andrew Bryan

(57) **Abstract**

A computer interface apparatus is selectably connectable to a USB interface or a PCMCIA interface or a parallel port interface of a computer system. In the preferred embodiment, selection is achieved simply by the user choosing the correct cable for connecting to the computer. When the correct cable is connected, the apparatus configures itself to operate with either the parallel or PCMCIA or USB port as appropriate. In one preferred embodiment, the apparatus serves as an interface between an ATAPI mass storage device and a host computer. The mass storage device may be a CD ROM drive, a hard disk drive, a floppy disk drive or a tape drive. Alternatively, the apparatus may provide a SCSI connection to the mass storage device.

## Description

### FIELD OF THE INVENTION

The present invention relates to a computer interface apparatus and in particular to such apparatus connectable between a computer system and a peripheral device.

### BACKGROUND OF THE INVENTION

In the last few years, a considerable market has appeared for portable external storage devices. Typically, such a device comprises a mass storage device such as a hard disk, a computer tape drive, a floppy disk drive or a CD ROM drive, a suitable power supply and connection means for connecting the device to a computer system. This type of device is extremely useful for example for backing up data onto a tape, installing software from a CD ROM onto a computer system not normally having a CD ROM drive or for transferring large amounts of data between computer systems such as between an office and a home computer. Furthermore, this type of device is usually easier to install than a so-called internal storage device which at the very least requires the cover to be removed from the computer system and is therefore unsuitable for inexperienced users. Often installation simply requires connection of the device to the computer system and the loading of suitable software drivers onto the computer system from a supplied floppy disk. Usually the software installation is completely automatic.

Many of the above described devices connect to a computer system via the parallel port of the system which port is more normally used for connection to a printer. Some of these devices connect instead to a so-called Personal Computer Memory Card International Association (PCMCIA) port. This type of port is a general purpose interface (most usually found on notebook computers) designed for the connection of peripheral devices such as storage devices, modems and network adapters.

Similarly, some of these devices connect instead to a so-called Universal Serial Bus (USB) port. USB is a peripheral bus standard recently developed by industrial personal computer and telecommunication groups to provide self-configured connections to peripherals and networks. USB carries data at the rate of 12 megabits per second, which is suitable for low to medium speed peripherals such as from keyboards and mice to modems, telephones, printers, scanners, tape, CD-ROM and disk drives and digital cameras.

### SUMMARY OF THE PRESENT INVENTION

According to the present invention there is provided computer interface apparatus connectable between a computer system and a mass storage device to permit data transfer between the computer system and the storage device, comprising a first port for connection to a computer system, a second port for connection to a mass storage device, and selection means operable to permit the first port to be selectably connected to one of a parallel port and a PCMCIA port of a computer system.

Hitherto, it has not been possible to use a single prior art device for connection to both types of ports. Since the PCMCIA connection is generally faster than that via the parallel port, there is an incentive to use a PCMCIA connection wherever possible. Thus, it is not uncommon to purchase both types of prior art devices and their associated connecting cables and software so that the optimum choice may be made depending on the ports available on a computer system. Clearly this is a disadvantage at least in terms of convenience and cost.

By arranging for the present invention to be selectably connected to one of a parallel port and a PCMCIA port of a computer system, all of the above disadvantages are overcome.

Preferably the selection means includes at least one cable connectable to the first port and preferably the internal arrangement of the cable causes a change in operation of at least one other part of the apparatus depending on which connector of the at least one cable is connected to the first port. In the preferred embodiment, two cables are supplied both terminating in the same type of connector for connecting to the first port. The other end of each cable has a PCMCIA card and a 25 pin parallel port connector attached respectively. Thus when a user desires to connect the apparatus to a parallel port, he selects the cable having the parallel port connector at one end and connects the other end to the first port of the apparatus. This automatically causes the selection means to configure the device for parallel port operation. Alternatively, if a user desires to connect the apparatus to a PCMCIA port, the other cable is connected to the first port and the apparatus is automatically configured for PCMCIA operation.

Preferably, the internal arrangement of the at least one cable which causes the said changed operation includes an electrically conductive coupling between at least two pins on at least one connector of the at least one cable.

Preferably the second port is an Advanced Technology Attachment Packet Interface (ATAPI) or it may be a Small Computer System Interface (SCSI). Thus, conventional mass storage devices may be used with the apparatus since the ATAPI and SCSI interfaces are well known interfaces for the connection of tape devices, CD ROM drives and hard drives, for example. Furthermore, with the provision of a Small Computer System Interface (SCSI) interface, a user may even connect a device such as a scanner to his or her computers system.

Typically the apparatus includes an optional "pass-through" port connectable to a computer peripheral device which device is arranged to be connectable to a computer system parallel port. The pass-through port in conjunction with the preferred pass-through means operable to pass data and control signals directly between the first and pass-through ports when the selection means is operating to permit connection to the first port to a parallel port of a computer system, permits a device such as a printer or even additional apparatus in accordance with the invention, to be connected to the computer whilst the apparatus is connected to the parallel port of the computer system.

The invention also includes according to a second aspect thereof, a cable for connection between a computer system and the apparatus described above.

According to a third aspect of the invention, a mass storage device for connection to the computer system comprises a housing containing a mass storage device coupled to the second port of the apparatus described above.

According to yet another aspect of the invention, a USB connection is provided in addition to connections to the parallel port and/or the PCMCIA port. This is accomplished by a third port of the interface apparatus which supports USB connection. In this arrangement, there is provided computer interface apparatus connectable between a computer system and a mass storage device to permit data transfer between the computer system and the storage device, comprising either first port or third port for connection to a computer system, and the second port for connection to a mass storage device.

In one embodiment, the first port of the interface apparatus is configured for parallel connection. A selection means is operable to permit either the first port to be connected to a parallel port of a computer system, or the third port to be connected to a USB port of a computer system.

In another embodiment, the first port of the interface apparatus is selectable to operate as a parallel connection or a PCMCIA connection. A selection means is operable to permit one of three possible connections to a computer system. In particular, it permits the first port to be selectably connected to one of a parallel port, and a PCMCIA port of a computer system. Alternatively, it permits the third port to be connected to a USB port of a computer system.

Hitherto, each peripheral device tends to come with connection to one type of computer system port. It has not been possible to use a single prior art device for connection to multiple port types. For example, with the ubiquitous parallel port existing among desktop and laptop computers, many peripheral devices are preconfigured to connect to a computer via the parallel port only. However, as the newer, higher-performing and more convenient USB connection are becoming more common, there is then an incentive to use USB over a parallel port wherever it is found on a computer. Thus, it is not uncommon to purchase multiple prior art devices and their associated connecting cables and software, each differing only by its connection type, so that the optimum choice may be made depending on the ports available on a computer system. Clearly this is a disadvantage at least in terms of convenience and cost.

By arranging for the present invention to allow a peripheral to be selectably connected via one of a parallel or USB port of a computer system, or via one of a parallel, PCMCIA or USB port all of the above disadvantages are overcome.

Preferably the selection means includes at least one cable connectable from a computer system to the first or third port of the interface apparatus and preferably the internal arrangement of the cable causes a change in operation of at least one other part of the apparatus depending on which connector of the at least one cable is connected to the first or third port. In the preferred embodiment, a special cable is supplied for each type of connection from a given computer port to one of two ports of the interface apparatus.

Preferably, each type of connection is identifiable to the interface apparatus by the presence of a set of one or more "signature" signals among the pins of the cable connector to be attached to the interface apparatus.

Preferably, the interface apparatus selects the appropriate connection responsive to the "signature" signals.

Preferably, internal arrangement of the apparatus which causes the said changed operation includes validation of the signals from the connector attached to each of the first and third ports.

### BRIEF DESCRIPTION OF THE DRAWINGS

The invention will now be described by way of example with reference to the drawings in which:
Figure 1 is a schematic diagram of apparatus in accordance with the invention connected to a parallel port of a computer system;
Figure 2 is a schematic diagram of apparatus with the invention connected to a PCMCIA port of a computer system;
Figure 3 is a block diagram of the apparatus when configured for connection to a parallel port of the computer system;
Figure 4 is a block diagram of the apparatus when configured for connection to a PCMCIA port of the computer system;
Figure 5 shows the internal connections of a cable for connecting the apparatus of Figure 3 to the parallel port of a computer system;
Figure 6 shows the internal connections of a cable for connecting the apparatus of Figure 4 to the PCMCIA port of a computer system;
Figures 7A and 7B are schematic diagrams of apparatus in accordance with the invention respectively connected to a parallel port and to a USB port of a computer system;
Figure 8 is a block diagram of the apparatus that is configurable to interface a peripheral device to either a parallel port or a USB port; and
Figure 9 is a logic table for the Select Logic shown in Figure 8.

### DETAILED DESCRIPTION OF THE PREFERRED EMBODIMENT

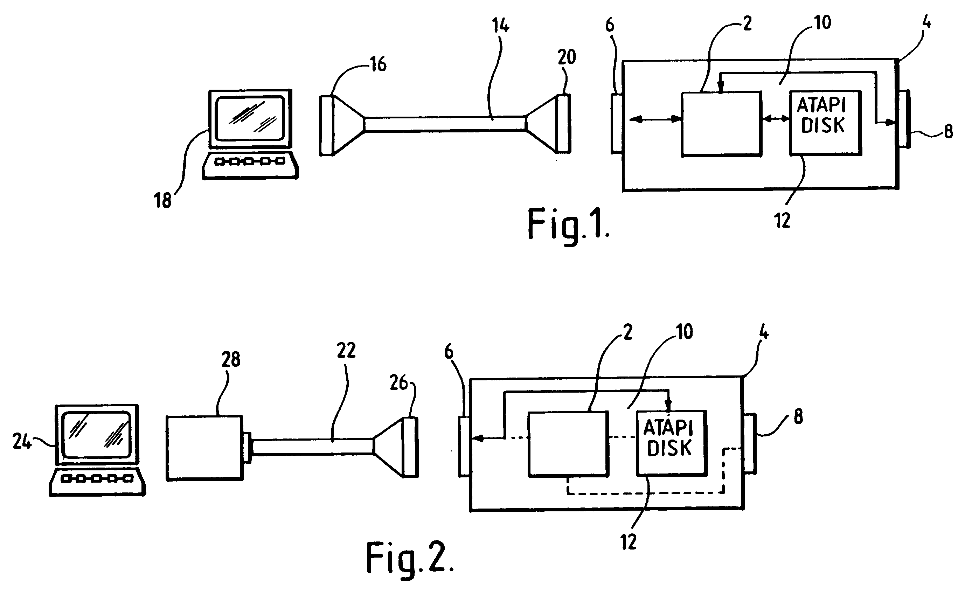

With reference to Figures 1 and 2, the general configuration of the apparatus in accordance with the invention can been seen.

As application specific integrated circuit (ASIC) 2 is housed in a housing 4 having a first, 44 pin port 6 for connection to a host computer system and a third, 25 pin port 8 for connection to a computer peripheral normally connectable to the parallel port of a computer system. A second internal port 10 is provided for connection to a hard disk 12 having an ATAPI interface.

With particular reference to Figure 1, a cable 14 is provided having at one end a 25 pin connector 16 for connection to the parallel port interface of host computer system 18 and a 44 pin connector 20 for connection to the first port 6.

With particular reference now to Figure 2, a different cable 22 is provided for connection to a host computer 24 having a PCMCIA interface. The cable 22 has a connector 26 which is mechanically identical to connector 20 but wired differently, and a PCMCIA card 28 for connection to the host computer system 24.

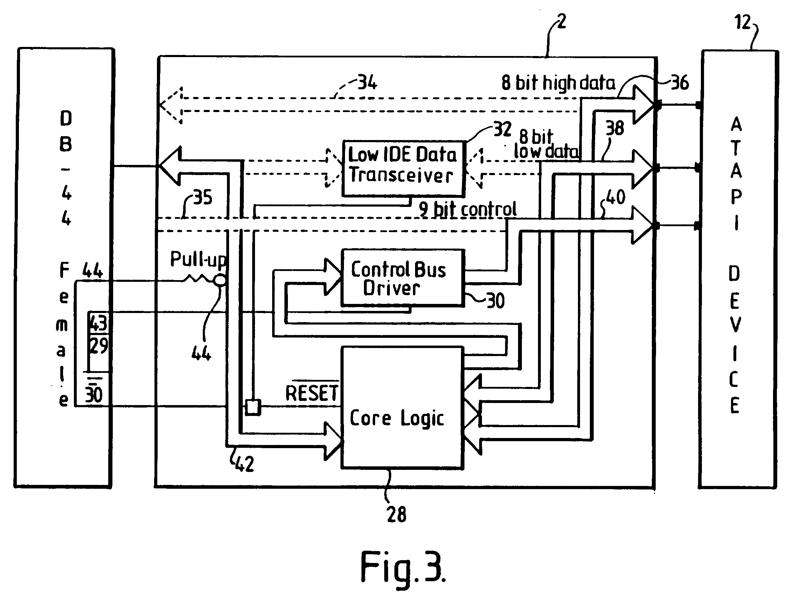

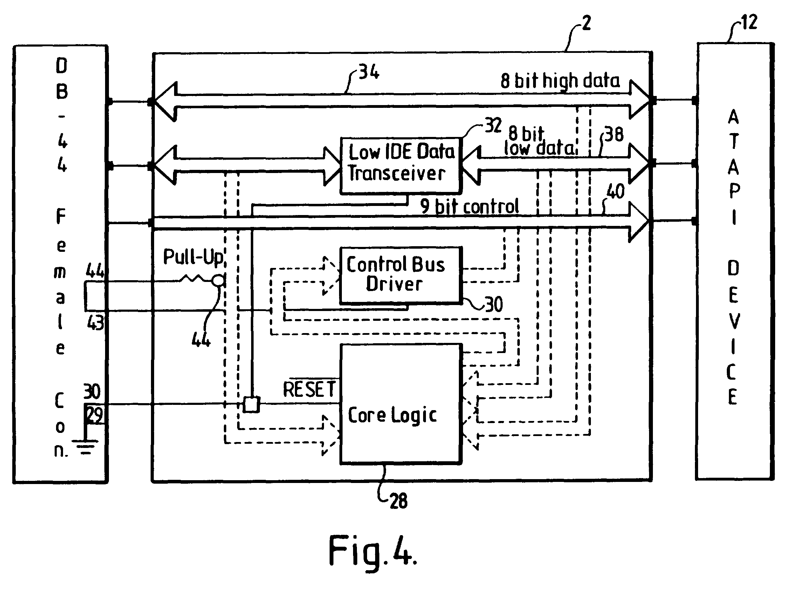

Figures 3 and 4 show the ASIC 2 in greater detail.

With reference to Figure 3, the ASIC 2 is shown connected to the 44 pin connector 20 of the parallel port cable 14. By virtue of the connections between pins 29 and 43 and pins 30 and 44 of this connector respectively, the ASIC is configured for parallel port operation.

In this configuration, the core logic 28 and the control bus driver 30 are enabled and the low Integrated Drive Electronics (IDE) data transceiver 32 is disabled. This causes the data paths shown in solid lines in the Figure to be activated. In parallel port mode, there is no connection on the 44 pin connector 20 to the 8 bit high data path 34. Similarly no connections are made on connector 20 for the 9 bit control path 35 in this mode.

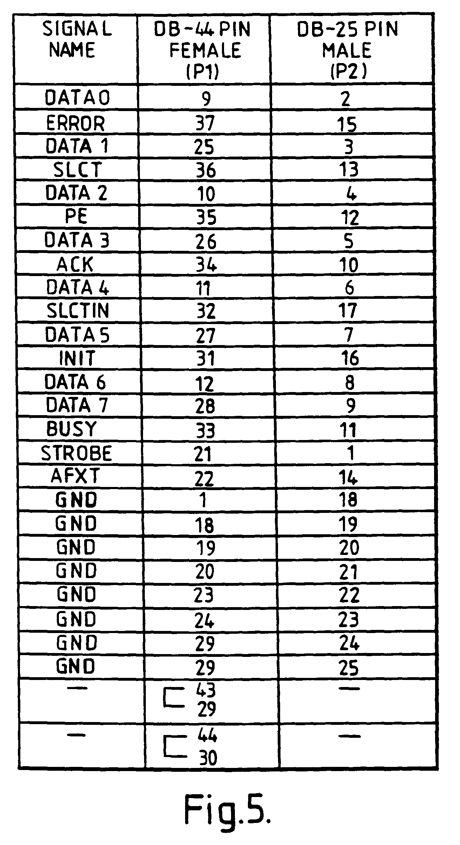

The core logic 28 generates the 8 bit high data, the 8 bit low data and 9 bit control signals on paths 36, 38 and 40 respectively which are required by the ATAPI device. These signals are generated according, to the data and control signals received from the host computer via its parallel port along a parallel port path 42. For detailed identification of the signals, the pin connections and signal names for the connectors 16 and 20 are shown in Figure 5.

With reference to Figure 4, in PCMCIA mode, the cable 22 instead of making the connections between pins 43 and 29 and 44 and 30 respectively, has connections, between pins 43 and 44 and pins 29 and 30. These connections cause the core logic 28 and control bus driver 30 to be disabled and the low IDE data transceiver 32 to be enabled. It will be noted from both Figures 3 and 4 that pin 44 of the 44 pin connector is always connected to a pull-up circuit 44.

In the PCMCIA configuration, the 8 bit high data, 8 bit low data and 9 bit control data are generated by the PCMCIA card 28 and are connected directly through to the ATAPI device 12 via paths 34/36, 38 and 40 respectively. The core logic and control bus driver in their disabled states are caused to put their I/O connections into a high impedance mode using tristate buffers. Thus, the signal paths shown in solid lines in Figure 4 are activated. Similarly, the I/O connections of the low IDE data transceiver 32 are put into a high impedance state when the ASIC is in its parallel port mode.

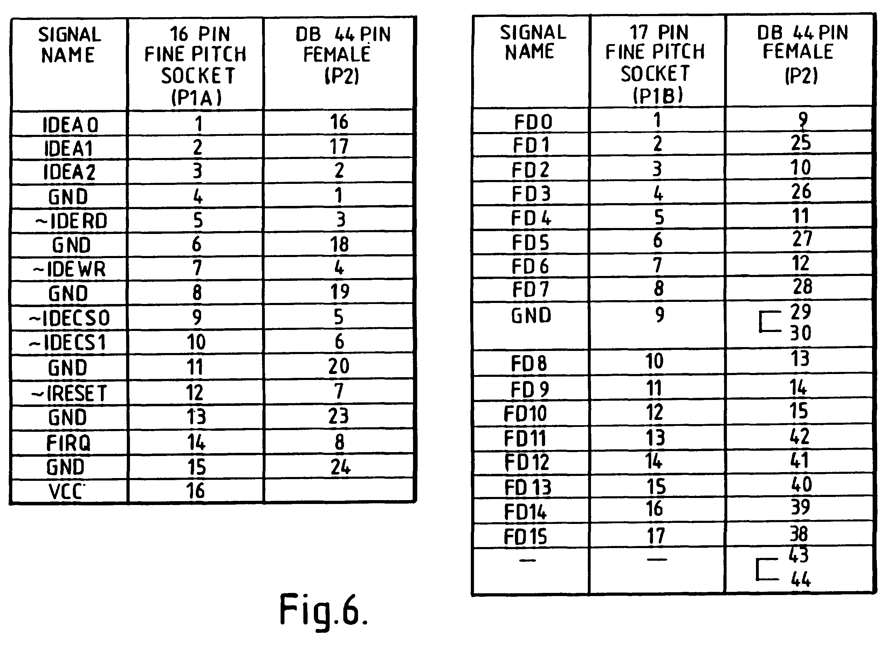

Figure 6 shows the pin connections and signal names for the cable 22. The left table shows the 9 bit control signals and the right table shows the 16 bit data (8 bit low data and 8 bit high data) signals. From an inspection of the connections on the 44 pin connector, it will be seen that the pins used for the 8 bit low data in the PCMCIA mode are the same as those used for the 8 bit data lines in the parallel mode. These are the only signal lines shared between the two cable 14, 22. Conflict is avoided as described above by causing the low IDE data transceiver 32 to enter a high impedance state when appropriate.

According to yet another aspect of the invention, a USB connection is provided in addition to connections to the parallel port and/or the PCMCIA port.

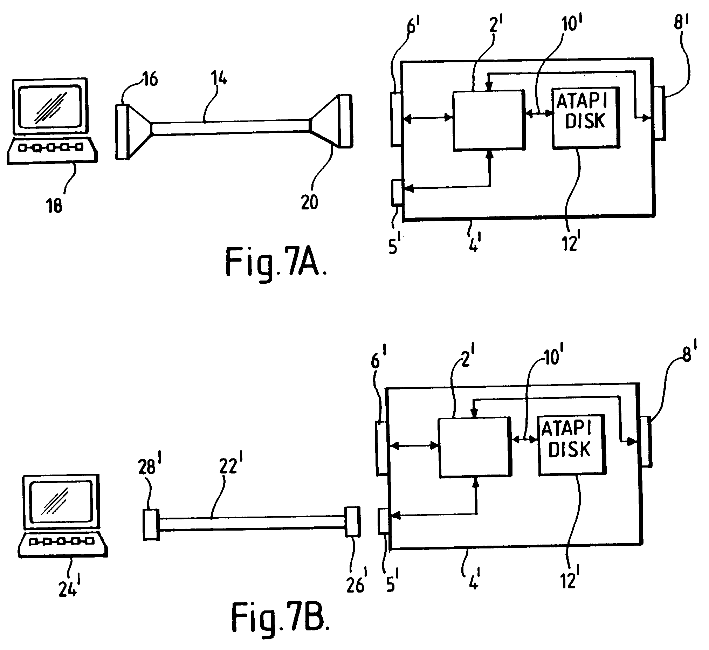

Figures 7A and 7B are schematic diagrams of apparatus in accordance with the invention respectively connected to a parallel port and to a USB port of a computer system.

In Figure 7A, an interface apparatus 4' is preferably implemented as an application specific integrated circuit (ASIC) 2' which is housed in a housing 4' having a first port accessible by means of a multi-pin socket 6' for connection to a host computer system 18'. A peripheral device 12' is coupled to the ASIC 2' via a device port 10'. In the example shown, the peripheral device is a hard disk having an ATAPI interface.

In one embodiment, the connection from the first port 6' is to a parallel port of the host computer 18'. In accordance with the disclosure earlier, this is effected by a parallel interconnect 14' which has a terminal connector 20' for attaching to the first port 6'. The connector 20' is configured such that one or more of its pins carry signal to identify itself to the interface apparatus 4'. This allows the interface apparatus to configure itself appropriately to operate with a parallel connection.

In the case of connection to the parallel port of the host computer, a pass-through parallel port 8' is optionally provided on the interface apparatus 4'. This will allow attachment of a parallel device such as a printer that is normally attached to the parallel port of the host computer.

In another embodiment, the connection from the first port 6' is to a PCMCIA port of the host computer 18'. In accordance with the disclosure earlier, this is effected by a corresponding PCMCIA interconnect able to provide corresponding identifying signals when attached to the first port 6'. This allows the interface apparatus to configure itself appropriately to operate with a PCMCIA connection.

In Figure 7B, connection is made with a USB port of the host computer 24'. This is accomplished by a USB port 5 on the interface apparatus. A USB interconnect 22' is connected at the host computer end by means of a 4 pin USB 'A' series plug connector 28' and is connected to USB port 5 of the interface apparatus by means of a 4 pin USB 'B' series plug connector 26'. The USB has four lines, Vcc, Data+, Data- and Ground. When the USB interconnect 22' is attached to the USB port 5' the presence of the ground signal on, say, pin 4 of the terminal connector 26' is used, in the preferred embodiment, to identify itself to the interface apparatus. This allows the interface apparatus to configure itself appropriately to operate with a USB connection.

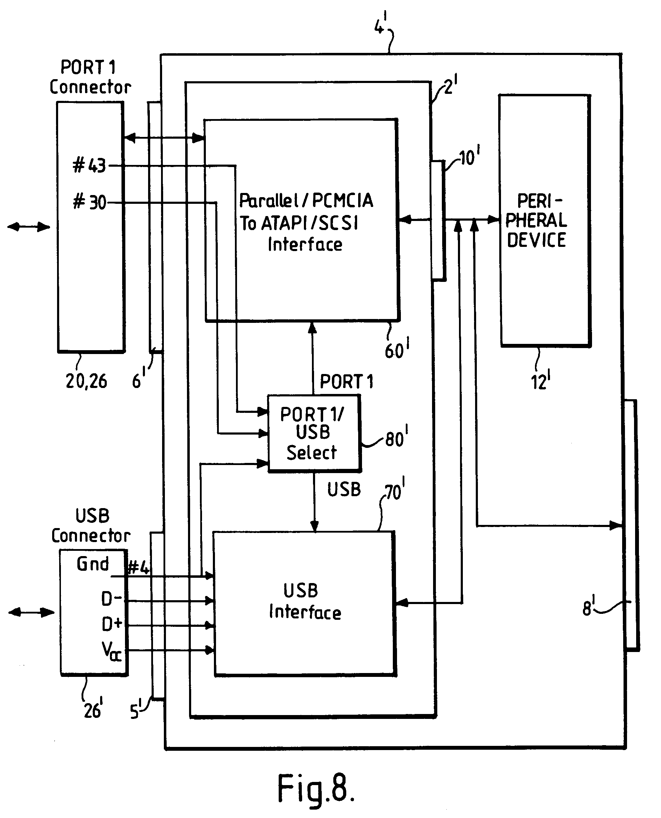

Figure 8 is a block diagram of the interface apparatus 6' that essentially provides an interface between a mass storage device 12' via the device port 10' and a host computer via either PORT1 port 6' or USB port 5'. The PORT1 port can be configured as either a parallel port, or selectable between a parallel and a PCMCIA port depending whether such port is available on the host computer as described above.

The ASIC 2' comprises a parallel and/or PCMCIA interface 60' and a USB interface 70'. The interface 60' routes signals between PORT1 port 6' and the device port 10'. It is essentially similar to the ASIC 2 described earlier in connection with Figures 1-6. The interface 70' routes data between USB port 5' and the device port 10'. The design of the USB interface is well specified and known in the art and will not be further elaborated.

A select logic 80' serves to selectively enable either the interface 60' or the interface 70'. The selection is made in response to signals detected at PORT1 port 6' and USB port 5'. As mentioned earlier, the signals are set by virtual of a particular type of interconnect being attached to the ports 5', 6'. For example, when the pair of input lines (#30, #43) = (0, 1) or (Ground, Vcc), the interface 60' is enabled to transfer in the parallel mode, and the interface 70' is disable. When (#30, #43) = (1, 0), the interface 60' is enabled to transfer in the PCMCIA mode with the interface 70' disable. When an input line #4 = 0, and (#30, #40) ≠ (0, 1) or (1,0), then the USB interface 70' is enabled while the interface 60' is disable.

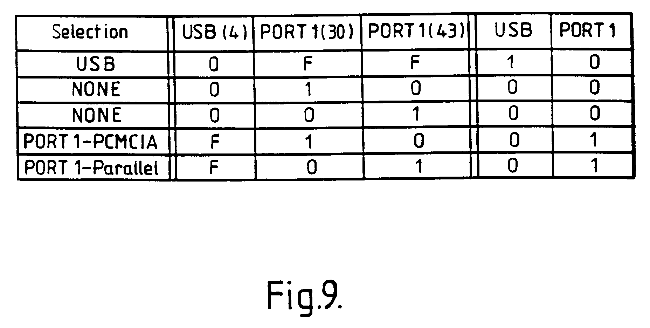

Figure 9 shows the logic table of the select logic 80' for the example given above. Basically, when a port has no interconnect attached, its pins is floated, as denoted by "F". The logic output control lines, PORT1 and USB respectively enable the interfaces 60' and 70'. When an interconnect is attached to PORT1 port 6', the interface 60' is enabled by PORT1. When an interconnect is attached to USB port 5', the interface 70' is enabled by USB. In the case where both PORT1 port 6' and USB port 5' each has an interconnect attached, the logic 80' disables both interfaces.

It will be appreciated from the above, therefore, that no user operation other than to select the correct connecting cable, need be performed to allow connection of a peripheral device 12' to either a USB or a PCMCIA or a parallel port. Thus the invention provide a particularly simple and effective solution to the problems stated in the introduction.

While the embodiments of the various aspects of the present invention that have been described are the preferred implementation, those skilled in the art will understand that variations thereof may also be possible. Therefore, the invention is entitled to protection within the full scope of the appended claims.

## Claims

1. Computer interface connectable between a computer system and a mass storage device to permit data transfer between the computer system and the storage device, comprising:
a first port for connection to a computer system,
a second port for connection to a mass storage device,
a third port for connection to a Universal Serial Bus of the computer system, and
port selection means for enabling connection from either said first port or said third port to the computer system.

2. Apparatus according to claim 1, wherein when connection from said first port is enabled, said port selection means is operable to permit the first port to be selectably connected to one of a parallel port and a PCMCIA port of a computer system.

3. Apparatus according to claim 1, wherein the selection means includes at least one cable connectable to either first or third port and wherein the internal arrangement of the cable causes changed operation of at least one other part of the apparatus depending on which connector of the at least one cable is connected to the first port.

4. Apparatus according to claim 3, wherein the internal arrangement of the at least one cable which causes the said changed operation includes an electrically conductive coupling between at least one pins on at least one connector of the at least one cable.

5. Apparatus according to claim 1, wherein the second port is an ATAPI.

6. Apparatus according to claim 1, wherein the second part is a SCSI.

7. Apparatus according to claim 1, further including a fourth port connectable to a computer peripheral device which device is arranged to be connectable to a computer system parallel port.

8. Apparatus according to claim 7, including pass-through means operable to pass data and control signals directly between the first and fourth ports when the selection means is operating to permit connection of the first port to a parallel port of a computer system.

9. A cable arranged such that one end includes a Personal Computer Memory Card Interface and the other end a connector, the connector having some pin slots tied together so that the type of cable can be sensed by a computer interface apparatus.

10. A cable arranged such that one end includes a parallel port connector for connecting to a parallel port of a computer and the other end contains a connector, the connector including some pin slots tied together so that the type of cable can be sensed by a computer interface apparatus.

11. The cable of claim 10, wherein the connector has more pin slots than the parallel port connector.

12. A system comprising a computer interface connectable between a computer system and a mass storage device to permit data transfer between the computer system and the storage device, comprising:
a first port for connection to a computer system,
a second port for connection to a mass storage device,
a third port for connection to a Universal Serial Bus of the computer system, and
port selection means operable to permit the first port to be selectably connected to one of a parallel port and a PCMCIA port of a computer system or the third port to be selectably connected to a Universal Serial Bus of a computer system.
